# EUROPEAN PATENT SPECIFICATION

(11) **EP 4 296 428 B1**
(45) Date of publication and mention of the grant of the patent: **18.09.2024**
(21) Application number: 22180776.1
(22) Date of filing: 23.06.2022
(51) Int. Cl.: E01B 31/18, B23K 23/00, E01B 11/52, E01B 29/42, E01B 29/44

(54) **MOULD FOR APPLYING TO A COLLAR OF A RAIL WHICH IS TO BE REPAIRED BY ALUMINOTHERMIC WELDING AND METHOD FOR REPAIRING A HEAD OF A RAIL WITH SUCH MOULD**
FORM ZUM ANWENDEN AUF EINEM DURCH ALUMINOTHERMISCHES SCHWEISSEN ZU REPARIERENDEN SCHIENENHALS UND VERFAHREN ZUM REPARIEREN EINES SCHIENENKOPFES MIT EINER SOLCHEN FORM
MOULE À APPLIQUER SUR LE COLLET D'UN RAIL QUI DOIT ÊTRE RÉPARÉ PAR SOUDAGE ALUMINOTHERMIQUE ET PROCÉDÉ DE RÉPARATION DE LA TÊTE D'UN RAIL AVEC UN TEL MOULE

(43) Date of publication of application: 27.12.2023
(73) Proprietor: Goldschmidt Holding GmbH, 04109 Leipzig (DE)
(72) Inventor: Keichel, Jörg, 04420 Markranstädt (DE); Yang, Jinling, 06128 Halle (DE)

(56) References cited:
- AU-A- 5 029 185
- DE-A1- 2 825 139
- GB-A- 2 028 704
- JP-A- H09 122 980
- US-B2- 11 332 891

## Description

### Technical Field

The present invention relates to a mould for applying to a collar of a rail which is to be repaired by aluminothermic welding and a method for repairing a head of a rail with a collar.

### Background Art

At the end of the nineteenth century, aluminothermic welding was invented to weld rail tracks with the development of the metallurgical and chemical industries. To perform the aluminothermic welding, a worker creates a defined gap between two rail ends, installs a mould around the gap, preheats the gap, and conducts an aluminothermic reaction. After the reaction is done, the liquid steel fills the gap and some liquid steel residues are present outside the profile of the rail to form a collar around the newly-formed weld joint.

If a worker needs to repair a defect in the head of a rail with the collar, the worker may use arc welding. However, arc welding quality is poorer than aluminothermic welding quality. A worker may also use aluminothermic welding to repair it. However, the conventional mould for aluminothermic welding does not fit to receive the collar left on the rail, so a worker needs to cut out the whole defected rail and needs to repeat the whole conventional aluminothermic welding. The conventional technique costs time and money. Furthermore, it is not efficient to cut off the whole defected rail for a small defect of the rail head. Hence, the conventional technique does not provide a mould for applying to a collar of a rail which is to be repaired by aluminothermic welding.

Examples of prior art can be found in documents DE2825139A1, AU5029185A, GB2028704A and JPH09122980A.

### Technical Problem to be Solved

The objective of the present invention is to provide a mould for applying to a collar of a rail for aluminothermic welding and for receiving the collar on the rail.

### Summary of the Invention

In accordance with the present invention, there is provided a mould having the features of claim 1 and a method for repairing a head of a rail with a collar using that mould having the features of claim 13.

Further preferred embodiments are defined by the features of dependent claims 2-12,14,15.

### Brief Description of Drawings

Fig. 1 is a cross-section view of a mould for applying to a collar of a rail for aluminothermic welding in accordance with the present invention.
Fig. 2 is a view of a piece of the mould of Fig. 1 applied to different positions of the area to be welded.
Fig. 3a is a front view of a piece of the mould of Fig. 1.
Fig. 3b is a cross-section view of a piece of the mould of Fig. 3a.
Fig. 4a is a front view of a piece of a mould of another embodiment.
Fig. 4b is a cross-section view of a piece of a mould of Fig. 4a.
Fig. 4c shows the flow of the liquid steel in the mould of Fig. 4a.
Fig. 5a is a top view of a piece of a mould of partial Fig. 1 before heating.
Fig. 5b is a top view of a piece of a mould of partial Fig. 1 after heating.

### Detailed Description

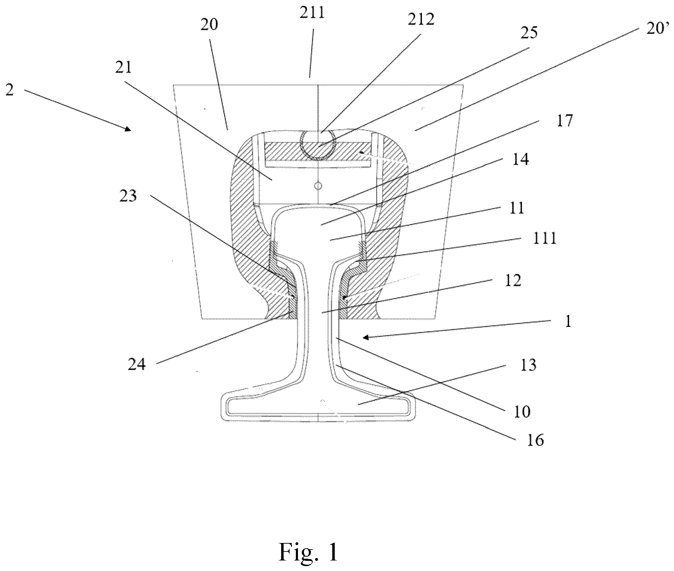

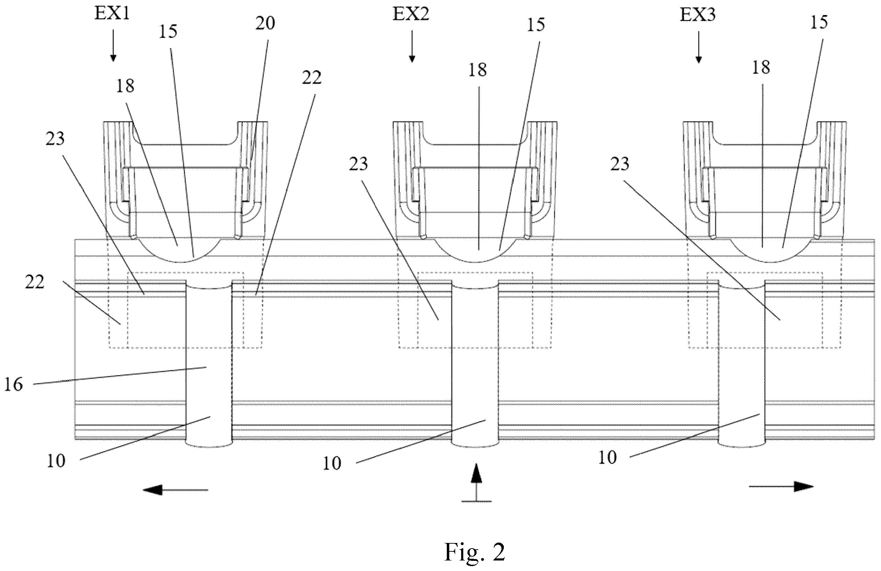

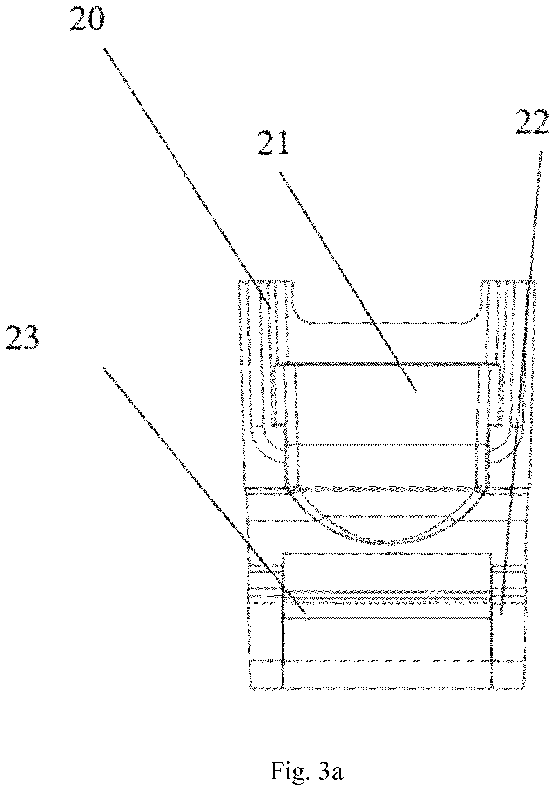

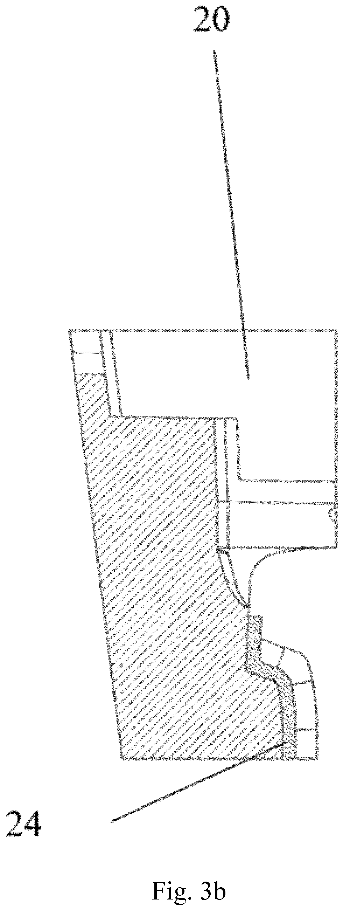

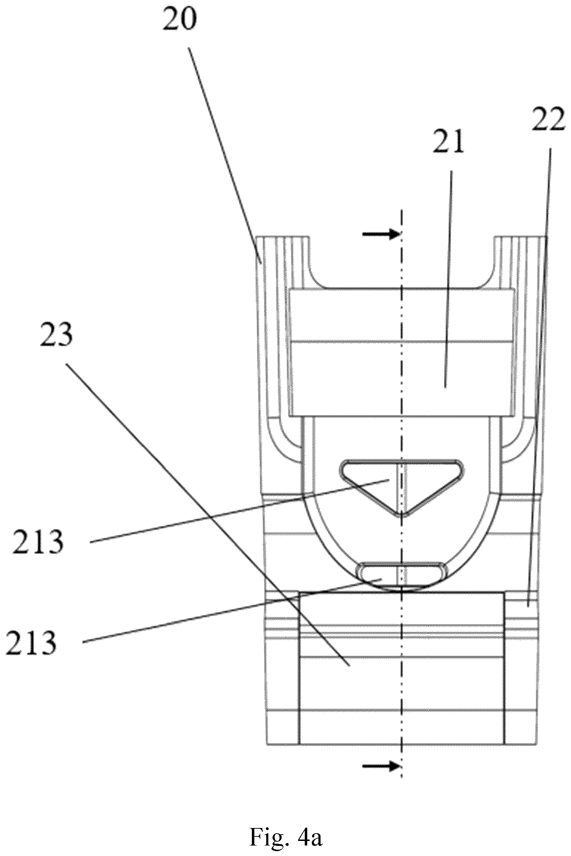

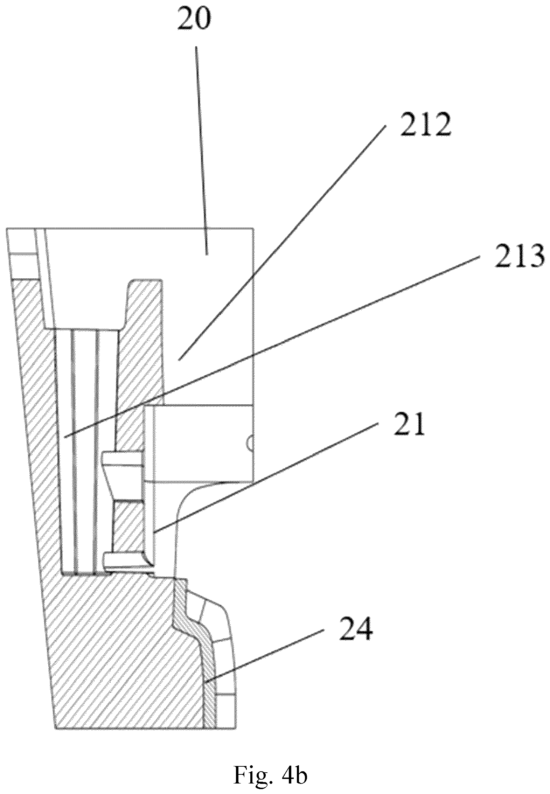

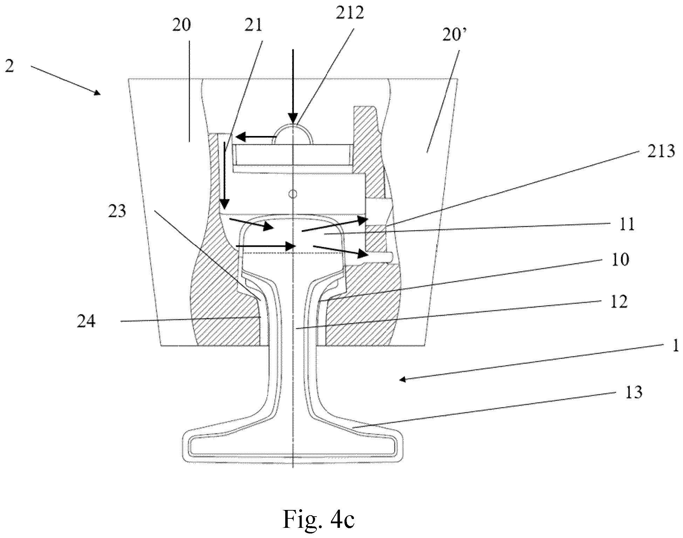

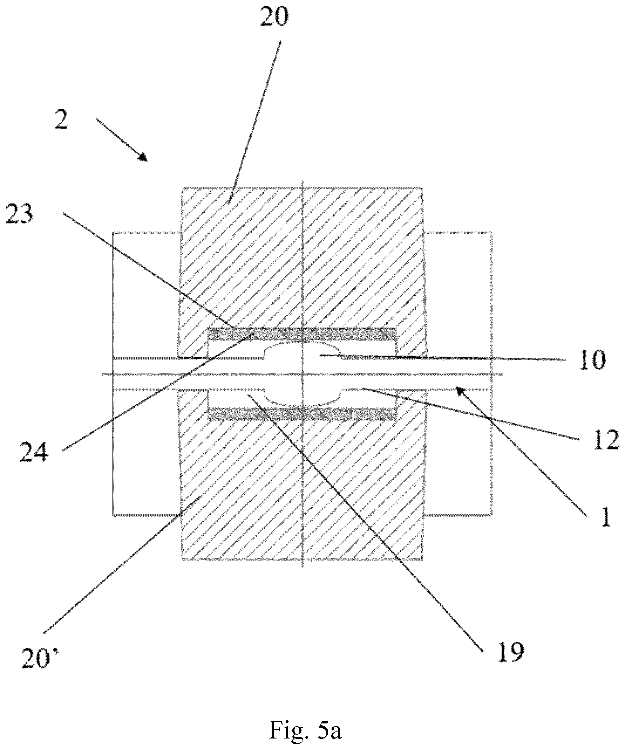

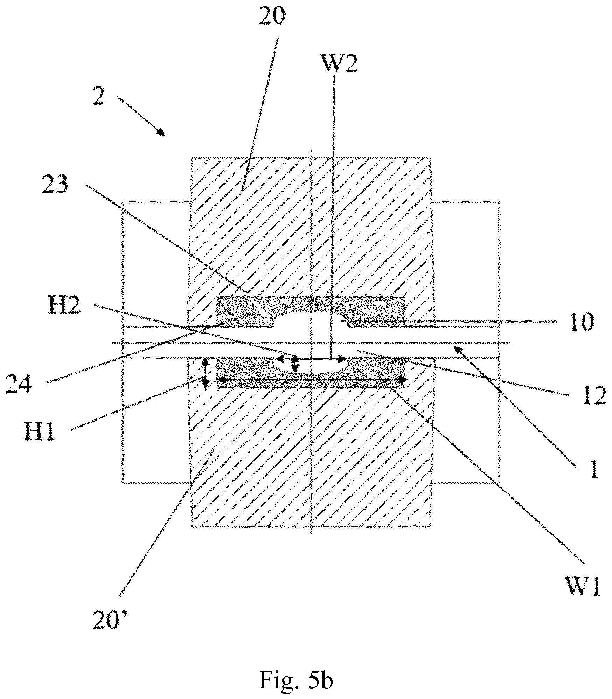

Fig. 1 is a cross-section view of a mould for applying to a collar of a rail for aluminothermic welding in accordance with the present invention. Fig. 2 is a view of a piece of the mould of Fig. 1 applied to different positions of the area to be welded. Fig. 3a is a front view of a piece of the mould of Fig. 1. Fig. 3b is a cross-section view of a piece of the mould of Fig. 3a. Fig. 4a is a front view of a piece of a mould of another embodiment. Fig. 4b is a cross-section view of a piece of a mould of Fig. 4a. Fig. 4c shows the flow of the liquid steel in the mould of Fig. 4a. Fig. 5a is a top view of a piece of a mould of partial Fig. 1 before heating. Fig. 5b is a top view of a piece of a mould of partial Fig. 1 after heating.

Please refer to all drawings together. A rail 1 comprises a head 11, a web 12, and a foot 13. The rail 1 can also include a weld joint 16, such as an aluminothermic welding joint. The present invention can be applied to all types and all lengths of rails. The rail 1 shown in the drawings is illustrated just as a simplified section of rails for the explanation. The rail 1 may include a collar 10 if a worker installed or repaired the rail 1 with joining before (such as aluminothermic welding, arc welding, flash-butt welding, induction welding, or any kinds of welding). The collar 10 is steel residues presented on a weld joint 16 of the rail 1. During a rail installing/repairing process, a worker grinds off the collar 10 of the running surface 17 of the head 11 of the rail 1, so train wheels can smoothly contact the running surface 17 of the head 11 of the rail 1. If train wheels will not contact the rest parts of the rail 1 (such as the lower part of the head 11, the web 12, and the foot 13), a worker will not remove the collar 10 from the rest parts and will leave the collar 10 on the lower part of the head 11, the web 12, and the foot 13 of the rail 1. So, a collar 10 may exist on a weld joint 16 of a rail 1.

The present invention provides a mould 2 used for applying to a collar 10 of a rail 1. A worker cuts off the defected section 18 of the head 11 of the rail 1 to form a hole 15, then places the mould 2 around the hole 15 and the collar 10, then preheats the rail 1 and the mould 2, and conducts an aluminothermic welding reaction to fill the hole 15 with liquid steel. Specifically, the mould 2 comprises at least two pieces 20, 20'. The pieces 20, 20' are configured to be temporarily assembled opposite one another and be temporarily assembled on either side of the rail 1 to enclose the head 11 and the web 12. The pieces 20, 20' provide a channel 21 for facilitating the flowing of liquid steel into an area to be welded 14. The channel 21 includes an inlet 211 at the top of the mould 2. The mould 2 may include a plug 25 which is positioned and placed in the inlet 211 of the channel 21. In a preferred embodiment, the plug 25 creates an ingating system 212. After ignition, the welding chemicals perform a reaction to produce liquid steel and fill the hole 15 with the liquid steel.

To receive the collar 10 of the rail 1, each piece 20, 20' includes protruding portions 22 and a collar receiving area 23 which are at the lower part of the pieces 20, 20'. Upon assembly, the protruding portions 22 attach to the web 12 and the underside 111 of the head 11. In addition, the protruding portions 22 help the mould 2 to be installed and attached securely to the rail 1. Otherwise, the mould 2 could be fell out of the rail 1 during installation or aluminothermic reaction. In a preferred embodiment, the protruding portions 22 may also attach to the web 12, the head 11, as well as the foot 13 of the rail 1. The height H1 of the protruding portions 22 is higher than the height H2 of the collar 10, so the collar 10 is received and accommodated between the protruding portions 22. In a preferred embodiment, the height H1 of the protruding portions 22 is between 3 mm and 25 mm. The protruding portions 22 define and limit the collar receiving area 23 therein. Namely, the collar receiving area 23 is defined between the protruding portions 22 and is used for receiving the collar 10. The width W1 of the collar receiving area 23 is bigger than the width W2 of the collar 10. In a preferred embodiment, the width W1 of the collar receiving area 23 is between 25 and 200 mm.

The collar receiving area 23 receives the collar 10 to allow aluminothermic welding at different positions around the collar 10 corresponding to the different positions of the area to be welded 14. Fig. 2 shows three examples EX1, EX2, EX3 of the distance relationship between the hole 15 and the collar 10. The second example EX2 shows that the hole 15 is right above the center line of the collar 10, whereas the first example EX1 and the third example EX3 show that the holes 15 deviate from the center line of the collars 10. The collar receiving area 23 may receive the collar 10 and, at the same time, the mould 2 can allow the fluid steel to fill the hole 15 through the channel 21. Therefore, the collar 10 does not hinder the mould 2 from performing aluminothermic welding at different positions of the defect around the collar 10.

To prevent the liquid steel from flowing out to other areas that are not intended to be welded, a sealing layer 24 may be provided in a preferred embodiment. The sealing layer 24 is disposed in the collar receiving area 23 and configured to enclose the web 12 and the underside 111 of the head 11. The sealing layer 24 is disposed and fixed to the collar receiving area 23 by different means, such as adhesives, binders, glues, tapes, locking means, or any fixing means. In an embodiment, the sealing layer 24 is embedded in the collar receiving area 23. The sealing layer 24 may also be a refractory felt, refractory wool, a sealing coating, or agglomerated sand. The materials of the sealing layer 24 may be from one or more of the following chemicals: ammonium phosphate, calcium silicate, sodium silicate, and co-extruded graphite. In this way, if a worker wants to repair the head 11, the liquid steel does not flow out to the web 12 and the foot 13 due to the presence of the sealing layer 24. In a preferred embodiment, the sealing layer 24 is compressible. In a preferred embodiment, the sealing layer 24 is expandable when heated (see Fig. 5b). If a worker installs the mould 2 onto the rail 1 and preheats the rail 1 and the mould 2, the sealing layer 24 may expand to fill the gap 19 between the collar receiving area 23 and the rail 1 (see Fig. 5b). The thickness of the sealing layer 24 may be between 2 mm and 15 mm.

The piece 20 in Fig. 3b shows the sealing layer 24 disposed along the collar receiving area 23. The sealing layer 24 may be formed as one integral layer. In another embodiment, the sealing layer 24 may be designed to be multiple layers including different intumescent materials, expanding materials, or any kind of sealing materials. In a preferred embodiment, the upper of the sealing layer 24 protrudes outside the upper of the collar 10 to withstand the turbulence of the flowing of the liquid steel.

To improve the flowing of the liquid steel, the channel 21 includes an ingating system 212 for pouring and feeding the liquid steel. Moreover, the channel 21 includes a riser system 213 for feeding the area to be welded 14 to prevent shrinkage (see Fig. 4a and Fig. 4b). The black arrows in Fig. 4c show the flow of the liquid steel in the mould 2 of Fig. 4a.

Fig. 5a and Fig. 5b illustrate the expansion of the sealing layer 24 with heating. To perform the aluminothermic welding, a worker places the mould 2 around the rail 1. Before heating, the sealing layer 24 is in the collar receiving area 23 (see Fig. 5a) and may be deformed and compressed to fit the collar 10. After the worker heats the mould 2 and the rail 1, the sealing layer 24 is heated and expands to fill the gap 19 between the collar receiving area 23 and the rail 1 (see Fig. 5b). In this way, the liquid steel will be contained in the head 11 and in the area to be welded 14 instead of flowing out.

The present invention provides a method for repairing a head 11 of a rail 1 with a collar 10. The method comprises:
- measuring an area to be welded 14 by using a gauge to define the area to be repaired so that the collar 10 can fit into the collar receiving area 23 of the mould 2, wherein the collar receiving area 23 receives the collar 10 to allow aluminothermic welding at different positions around the collar 10 corresponding to the different positions of the area to be welded 14,
- cutting off the head 11 with a cutting tool to form a hole 15, wherein the maximum distance from the center of the hole 15 (i.e., the area to be welded 14) is limited within the collar receiving area 23,
- placing a mould 2 to the area to be welded 14,
- preheating the area to be welded 14, and
- performing welding.

To sum up, the present invention provides a mould 2 for applying to a collar 10 of a rail 1 which is to be repaired by aluminothermic welding and a method for repairing a head 11 of a rail 1 with a collar 10.

### List of Elements

- 1: rail
- 10: collar
- 11: head
- 111: underside of the head
- 12: web
- 13: foot
- 14: area to be welded
- 15: hole
- 16: weld joint
- 17: running surface
- 18: defected section
- 19: gap
- 2: mould
- 20, 20': piece
- 21: channel
- 211: inlet
- 212: ingating system
- 213: riser system
- 22: protruding portions
- 23: collar receiving area
- 24: sealing layer
- 25: plug
- H1, H2: height
- W1, W2: width
- EX1: Example 1
- EX2: Example 2
- EX3: Example 3

## Claims

1. A mould for applying to a collar of a rail which is to be repaired by aluminothermic welding, the rail (1) including a head (11), a web (12) and a foot (13), the mould (2) comprising:
at least two pieces (20, 20') temporarily assembled opposite one another and on either side of the rail (1) to enclose the head (11) and the web (12), the pieces (20, 20') providing a channel (21) for flowing liquid steel into an area to be welded (14), **characterized in that** each piece (20, 20') includes:
protruding portions (22) for attaching to the web (12) and the underside (111) of the head (11), and
a collar receiving area (23) for receiving the collar (10), the protruding portions (22) defining and limiting the collar receiving area (23) therein.

2. The mould according to Claim 1, wherein the collar receiving area (23) is configured to receive the collar (10) to allow aluminothermic welding at different positions around the collar (10) corresponding to the different positions of the area to be welded (14).

3. The mould according to one of the preceding claims, wherein the height (H1) of the protruding portions (22) is configured to be higher than the height (H2) of the collar (10), and the width (W1) of the collar receiving area (23) is configured to be bigger than the width (W2) of the collar (10).

4. The mould according to one of the preceding claims, wherein the width (W1) of the collar receiving area (23) is between 25 mm and 200 mm.

5. The mould according to one of the preceding claims, wherein the height (H1) of the protruding portions (22) is between 3 mm and 25 mm.

6. The mould according to one of the preceding claims, wherein each piece (20, 20') includes a sealing layer (24) disposed in the collar receiving area (23) and configured to enclose the web (12) and the underside (111) of the head (11).

7. The mould according to Claim 6, wherein the sealing layer (24) is expandable when heated.

8. The mould according to Claim 6 or Claim 7, wherein the sealing layer (24) is compressible.

9. The mould according to one of Claims 6-8, wherein the sealing layer (24) is refractory felt.

10. The mould according to one of Claims 6-8, wherein the sealing layer (24) is refractory wool.

11. The mould according to one of Claims 6-10, wherein the thickness of the sealing layer (24) is between 2 mm and 15 mm.

12. The mould according to one of the preceding claims, wherein the channel (21) includes an ingating system (212) for pouring and feeding the liquid steel and a riser system (213) for feeding the area to be welded (14) to prevent shrinkage.

13. A method for repairing a head of a rail with a collar, the rail (1) including a head (11), a web (12) and a foot (13), the method comprising:
measuring an area to be welded (14),
cutting off the head (11) with a cutting tool,
placing a mould (2) of one of Claims 1-12 to the area to be welded (14),
preheating the area to be welded (14), and
performing welding.

14. The method of Claim 13, wherein the measuring step includes using a gauge to define the area to be repaired so that the collar (10) fits in the collar receiving area (23) of the mould (2).

15. The method of Claim 13 or Claim 14, wherein the collar receiving area (23) receives the collar (10) to allow aluminothermic welding at different positions around the collar (10) corresponding to the different positions of the area to be welded (14).

## Patentansprüche

1. Form zum Aufbringen auf einen Kragen einer Schiene, die durch aluminothermisches Schweißen repariert werden soll, wobei die Schiene (1) einen Kopf (11), einen Steg (12) und einen Fuß (13) beinhaltet, wobei die Form (2) Folgendes umfasst:
mindestens zwei Stücke (20, 20'), die vorübergehend gegenüberliegend und auf beiden Seiten der Schiene (1) zusammengefügt sind, um den Kopf (11) und den Steg (12) zu umschließen, wobei die Stücke (20, 20') einen Kanal (21) zum Strömen von Flüssigstahl in einen Bereich 14, der geschweißt werden soll, bereitstellen, **dadurch gekennzeichnet, dass** jedes Stück (20, 20') Folgendes umfasst:
vorstehende Abschnitte (22) zum Befestigen am Steg (12) und an der Unterseite (111) des Kopfes (11), und
einen Kragenaufnahmebereich (23) zum Aufnehmen des Kragens (10), wobei die vorstehenden Abschnitte (22) den Kragenaufnahmebereich (23) darin definieren und begrenzen.

2. Form nach Anspruch 1, wobei der Kragenaufnahmebereich (23) so konfiguriert ist, dass er den Kragen (10) aufnimmt, um aluminothermisches Schweißen an verschiedenen Positionen um den Kragen (10) zu ermöglichen, die den verschiedenen Positionen des Bereichs 14, der geschweißt werden soll, entsprechen.

3. Form nach einem der vorhergehenden Ansprüche, wobei die Höhe (H1) der vorstehenden Abschnitte (22) so konfiguriert ist, dass sie höher als die Höhe (H2) des Kragens (10) ist und die Breite (W1) des Kragenaufnahmebereichs (23) so konfiguriert ist, dass sie größer als die Breite (W2) des Kragens (10) ist.

4. Form nach einem der vorhergehenden Ansprüche, wobei die Breite (W1) des Kragenaufnahmebereichs (23) zwischen 25 mm und 200 mm beträgt.

5. Form nach einem der vorhergehenden Ansprüche, wobei die Höhe (H1) der vorstehenden Abschnitte (22) zwischen 3 mm und 25 mm beträgt.

6. Form nach einem der vorhergehenden Ansprüche, wobei jedes Stück (20, 20') eine Dichtungsschicht (24) beinhaltet, die in dem Kragenaufnahmebereich (23) angeordnet und so konfiguriert ist, dass sie den Steg (12) und die Unterseite (111) des Kopfes (11) umschließt.

7. Form nach Anspruch 6, wobei die Dichtungsschicht (24) expandierbar ist, wenn sie erhitzt wird.

8. Form nach Anspruch 6 oder Anspruch 7, wobei die Dichtungsschicht (24) komprimierbar ist.

9. Form nach einem der Ansprüche 6-8, wobei die Dichtungsschicht (24) feuerfestes Filz ist.

10. Form nach einem der Ansprüche 6-8, wobei die Dichtungsschicht (24) feuerfeste Wolle ist.

11. Form nach einem der Ansprüche 6-10, wobei die Dicke der Dichtungsschicht (24) zwischen 2 mm und 15 mm beträgt.

12. Form nach einem der vorhergehenden Ansprüche, wobei der Kanal (21) ein Einfüllsystem (212) zum Gießen und Zuführen des Flüssigstahls und ein Speisersystem (213) zum Zuführen des Bereichs 14, der geschweißt werden soll, umfasst, um eine Schwindung zu verhindern.

13. Verfahren zum Reparieren eines Schienenkopfes mit einem Kragen, wobei die Schiene (1) einen Kopf (11), einen Steg (12) und einen Fuß (13) beinhaltet, wobei das Verfahren Folgendes umfasst:
Messen eines Bereichs 14, der geschweißt werden soll,
Abschneiden des Kopfes (11) mit einem Schneidwerkzeug,
Platzieren einer Form (2) nach einem der Ansprüche 1-12 an dem Bereich (14), der geschweißt werden soll,
Vorheizen des Bereichs (14), der geschweißt werden soll, und
Durchführen des Schweißens.

14. Verfahren nach Anspruch 13, wobei der Messschritt das Verwenden eines Messgeräts beinhaltet, um den Bereich, der repariert werden soll, so zu definieren, dass der Kragen (10) in den Kragenaufnahmebereich (23) der Form (2) passt.

15. Verfahren nach Anspruch 13 oder Anspruch 14, wobei der Kragenaufnahmebereich (23) den Kragen (10) aufnimmt, um aluminothermisches Schweißen an verschiedenen Positionen um den Kragen (10) zu ermöglichen, die den verschiedenen Positionen des Bereichs 14, der geschweißt werden soll, entsprechen.

## Revendications

1. Un moule à appliquer sur un collier d'un rail qui doit être réparé par soudure aluminothermique, le rail (1) comprenant un champignon (11), une âme (12) et un patin (13), le moule (2) comprenant:
au moins deux pièces (20, 20') temporairement assemblées l'une en face de l'autre et de chaque côté du rail (1) pour envelopper le champignon (11) et l'âme (12), les pièces (20, 20') fournissant un canal (21) pour l'écoulement d'un acier liquide dans une zone à souder (14), **caractérisé en ce que** chaque pièce (20, 20') comprend :
des parties saillantes (22) pour la fixation à l'âme (12) et à la face inférieure (111) du champignon (11), et
une zone de réception du collier (23) pour recevoir le collier (10), les parties saillantes (22) définissant et limitant la zone de réception du collier (23) à l'intérieur de celle-ci.

2. Le moule selon la Revendication 1, dans lequel la zone de réception du collier (23) est configurée pour recevoir le collier (10) pour permettre la soudure aluminothermique à différentes positions autour du collier (10) correspondant aux différentes positions de la zone à souder (14).

3. Le moule selon l'une des revendications précédentes, dans lequel la hauteur (H1) des parties saillantes (22) est configurée pour être supérieure à la hauteur (H2) du collier (10), et la largeur (W1) de la zone de réception du collier (23) est configurée pour être supérieure à la largeur (W2) du collier (10).

4. Le moule selon l'une des revendications précédentes, dans lequel la largeur (W1) de la zone de réception du collier (23) est comprise entre 25 mm et 200 mm.

5. Le moule selon l'une des revendications précédentes, dans lequel la hauteur (H1) des parties saillantes (22) est comprise entre 3 mm et 25 mm.

6. Le moule selon l'une des revendications précédentes, dans lequel chaque pièce (20, 20') comprend une couche d'étanchéité (24) disposée dans la zone de réception du collier (23) et configurée pour englober l'âme (12) et la face inférieure (111) du champignon (11).

7. Le moule selon la Revendication 6, dans lequel la couche d'étanchéité (24) est expansible lorsqu'elle est chauffée.

8. Le moule selon la Revendication 6 ou la Revendication 7, dans lequel la couche d'étanchéité (24) est compressible.

9. Le moule selon l'une des Revendications 6 à 8, dans lequel la couche d'étanchéité (24) est un feutre réfractaire.

10. Le moule selon l'une des Revendications 6 à 8, dans lequel la couche d'étanchéité (24) est de la laine réfractaire.

11. Le moule selon l'une des Revendications 6 à 10, dans lequel l'épaisseur de la couche d'étanchéité (24) est comprise entre 2 mm et 15 mm.

12. Le moule selon l'une des revendications précédentes, dans lequel le canal (21) comprend un système d'attaque (212) pour verser et alimenter l'acier liquide et un système de colonne montante (213) pour alimenter la zone à souder (14) afin d'éviter le retrait.

13. Un procédé permettant la réparation d'un champignon d'un rail avec collier, le rail (1) comprenant un champignon (11), une âme (12) et un patin (13), le procédé comprenant:
mesurer une zone à souder (14),
couper le champignon (11) avec un outil de coupe,
placer un moule (2) selon l'une des revendications 1 à 12 sur la zone à souder (14),
préchauffer la zone à souder (14), et
effectuer la soudure.

14. Le procédé selon la Revendication 13, dans lequel l'étape de mesure comprend l'utilisation d'une jauge pour définir la zone à réparer de sorte que le collier (10) s'insère dans la zone de réception du collier (23) du moule (2).

15. Le procédé selon la Revendication 13 ou la Revendication 14, dans lequel la zone de réception du collier (23) reçoit le collier (10) pour permettre la soudure aluminothermique à différentes positions autour du collier (10) correspondant aux différentes positions de la zone à souder (14).
